# EUROPÄISCHE PATENTSCHRIFT

(11) **EP 4 047 116 B1**
(45) Veröffentlichungstag und Bekanntmachung des Hinweises auf die Patenterteilung: **21.05.2025**
(21) Anmeldenummer: 22150774.2
(22) Anmeldetag: 10.01.2022
(51) Int. Cl.: D04H 1/559, B32B 5/14, B32B 5/26, B65D 65/40, D04H 1/56, D04H 3/16, B32B 5/08

(54) **VERWENDUNG EINES VERBUNDMATERIALS ALS VERPACKUNGSMATERIAL, INSBESONDERE FÜR STERILE VERPACKUNGSANWENDUNGEN**
USE OF A COMPOSITE MATERIAL AS A PACKAGING MATERIAL, IN PARTICULAR FOR STERILE PACKAGING APPLICATIONS
UTILISATION D'UNE MATIÈRE COMPOSITE EN TANT QUE MATIÈRE D'EMBALLAGE, EN PARTICULIER POUR APPLICATIONS D'EMBALLAGE STÉRILE

(30) Priorität: 17.02.2021 DE 102021103701
(43) Veröffentlichungstag der Anmeldung: 24.08.2022
(73) Patentinhaber: Carl Freudenberg KG, 69469 Weinheim (DE)
(72) Erfinder: SPÖRL, Johanna, 70182 Stuttgart (DE); WAGNER, Klaus-Dietmar, 68542 Heddesheim (DE); RAU, Michaela, 69198 Schriesheim (DE); KOLEW, Alexander, 67591 Wachenheim (DE); KIMURA, Naotaka, Moriyama-shi Shiga-ken 524-0012 (JP); VENUGOPAL, Arun Prasad, 69469 Weinheim (DE); HOLLINGSWORTH, Anthony, 69488 Birkenau (DE)
(74) Vertreter: Kuhn, Daniela

(56) Entgegenhaltungen:
- DE-T2- 60 019 928
- US-A1- 2019 145 032

## Beschreibung

Die Erfindung bezieht sich auf die Verwendung eines Verbundmaterials als Verpackungsmaterial, insbesondere für sterile Verpackungsanwendungen. Die Erfindung bezieht sich ferner auf eine Verpackung, die ein Verbundmaterial wie hierin beschrieben umfasst sowie auf ein Verfahren zum Bereitstellen eines verpackten Gegenstands.

In industriellen Verpackungsanwendungen, insbesondere im technischen Bereich der Medizin, besteht eine hohe Nachfrage nach sterilen Verpackungsmaterialien. Solche sterilen Verpackungsmaterialien werden für die Standardverpackung verschiedener Zusammensetzungen und Wirkstoffe, wie Arzneimittel und medizinische Flüssigkeiten, oder Vorrichtungen, wie Spritzen oder Wundauflagen, benötigt. Sterile Verpackungsmaterialien müssen eine spezifische Kombination vorteilhafter Eigenschaften aufweisen. Am wichtigsten ist, dass sie eine relativ hohe Stabilität aufweisen müssen. Dies ist notwendig, da Standardsterilisationsprozesse unter rauen Bedingungen durchgeführt werden, z.B. mit γ-Strahlung, unter Hitze oder Druck und/oder in Gegenwart von aggressiven Chemikalien wie Ethylenoxid. Wenn ein Verpackungsmaterial nicht ausreichend stabil ist, wird es im Sterilisationsprozess beschädigt und der verpackte Gegenstand kann verunreinigt werden. Weiterhin sollte ein steriles Verpackungsmaterial mechanisch stabil sein, um Beschädigungen und nachfolgende Verunreinigungen im Produktionsprozess, bei der Lagerung, dem Transport und dergleichen zu vermeiden. Ein stabiles Verpackungsmaterial sollte auch eine hohe Luftdurchlässigkeit als Voraussetzung für die Sterilisation mit Chemikalien aufweisen. Dennoch muss ein steriles Verpackungsmaterial eine hohe Barrierefunktion gegen Keime wie Bakterien oder Viren aufweisen. Für Standardanwendungen sollten sterile Verpackungsmaterialien auch relativ leicht und kostengünstig sein.

Gängige Verpackungsmaterialien, wie Papier oder Kunststofffolie, sind für Sterilgutverpackungen nicht geeignet, da ihnen eine ausreichende mechanische Stabilität für den Sterilisationsprozess, aber auch Luftdurchlässigkeit und/oder Barrierefunktion fehlen.

Herkömmliche Vliesstoffe sind auch nicht für sterile Verpackungsanwendungen geeignet. Herkömmliche Spinnvliese oder Stapelfaservliese haben relativ große Faserdurchmesser im Bereich von ca. 10 µm bis 100 µm. Die relativ dicken Fasern verleihen den Vliesstoffen eine hohe mechanische Festigkeit. Die Barrierefunktion der Vliese gegen Bakterien und Viren ist jedoch unzureichend, da die Porengrößen von typischerweise größer als 15 µm, zu groß sind.

Feinfasern mit Durchmessern im Bereich von ca. 0,3 µm bis 5 µm sind nach einem konventionellen Meltblowing-Verfahren erhältlich. Die Porengrößen von Meltblown-Vliesstoffen sind gering und können eine effiziente Barriere gegen Bakterien oder Viren darstellen. Die sehr feinen Fasern verleihen den Vliesstoffen jedoch nur eine geringe mechanische Festigkeit. Daher werden Meltblown-Vliesstoffe in der Regel bei Standardsterilisationsmethoden, z.B. mit γ-Strahlung, beschädigt. Darüber hinaus erhöht die geringe mechanische Festigkeit das allgemeine Risiko von Schäden bei der Produktion und Handhabung sowie bei der anschließenden Dekontamination. Daher sind Standard-Meltblown-Vliesstoffe in der Regel nicht geeignet und werden nicht für sterile Verpackungsanwendungen eingesetzt.

Um solche bekannten Probleme von Spinnvliesen oder Meltblown-Vliesen zu überwinden, werden in der Technik verschiedene Vliesstoffe für die Verwendung als Sterilgutverpackung laminiert. Typische Materialien sind drei- oder vierschichtige Laminate, bekannt als SMS (Spunbond-Meltblown-Spunbond) oder SMMS-Materialien. Verschiedene Vliesschichten können kombiniert und miteinander verklebt werden, typischerweise durch thermisches Verkleben mit thermoplastischen Komponenten. Dadurch entstehen sandwichartige Strukturen, die durch Meltblown-Schichten eine Barrierefunktion und durch die Spinnvliesschichten eine mechanische Festigkeit aufweisen.

Unter der Marke Tyvek von DuPont, USA, ist in diesem Zusammenhang ein Referenzprodukt für medizinische Sterilverpackungen, aber auch für verschiedene andere Anwendungen im Handel erhältlich. Das poröse Plattenmaterial wird durch ein sogenanntes "flash-spinning"-Verfahren aus hochdichtem Polyethylen gewonnen.

Beim "flash-spinning"-Verfahren wird ein Polymer zunächst in einem vorzugsweisen niedrig siedenden Lösungsmittel unter hohem Druck und vergleichsweise hoher Temperatur gelöst. Dabei ist das Lösungsmittel bei Temperaturen unterhalb seines Siedepunkts nicht in der Lage das Polymer zu lösen. Unter vergleichsweise hohem Druck und vergleichsweise hoher Temperatur wird die Polymerlösung anschließend durch eine Düse in eine Umgebung mit geringerem Druck gesprüht und dabei durch einen Gasstrom mit hoher Geschwindigkeit geleitet. Hierbei verdampft das Lösungsmittel sehr schnell und die entstehenden Polymerfäden werden verstreckt. Beim Ablegen der Polymerfäden entsteht schließlich das poröse Flächengebilde, das aus einem dreidimensionalen Netzwerk von Feinstfilamenten und faserartigen Bereichen besteht, welche durch Knotenpunkte miteinander verbunden sind. Anschließend wird das Material durch Kalandrieren mit glatten Walzen oder mit Gravurwalzen verfestigt. Das mittels "Flash-spinning"-Verfahren hergestellte poröse Flächengebilde unterscheidet sich strukturell von einem herkömmlichen Vliesstoff und wird beispielsweise in US 2010/0263108 A1, US 2008/0220681 A1 oder US 6.034.008 beschrieben. Der Herstellungsprozess der porösen Flächengebilde mittels "flash spinning" ist als lösungsmittelbasierter Prozess sehr ressourcen- und energieintensiv. Aufgrund der Handhabung brennbarer, explosionsfähiger, gesundheits- und umweltgefährdender Lösungsmittel bei hohen Temperaturen und Drücken erfordert er ein hohes Maß an Sicherheitsvorkehrungen, um eine unerwünschte und/oder spontane Freisetzung von Lösungsmitteln, Gemischen oder Gasen zu verhindern. Darüber hinaus sind die nach dem "flash spinning"-Verfahren hergestellten porösen Flächengebilde nicht sehr homogen. Da sie nicht wie herkömmliche Vliese aus normalen Fasern gebildet werden, ist die Unregelmäßigkeit der Struktur relativ hoch.

In Bezug auf sterile Verpackungsanwendungen erweist sich die Verwendung von dem oben beschriebenen hochdichten Polyethylen wegen seines Schmelzpunkts zwischen 115°C und 145°C als nachteilig. Ein so niedriger Schmelzpunkt ist problematisch, wenn das Material bei erhöhten Temperaturen sterilisiert werden soll. Darüber hinaus ist auch die Bedruckbarkeit solcher Materialien mit Beschriftungen oder dergleichen sowie ihre Verschweißbarkeit eingeschränkt.

DE60019928T2 offenbart ein Verfahren und eine Verwendung von Nonwovens.

Insgesamt besteht eine anhaltend hohe Nachfrage nach verbesserten Materialien für Sterilverpackungen, insbesondere für medizinische Anwendungen, die die oben genannten Nachteile überwinden.

Das Problem, das der Erfindung zugrunde liegt, ist die Bereitstellung von Verpackungsmaterialien, die die oben genannten Nachteile zumindest teilweise überwinden.

Ferner sollen Verpackungsmaterialien bereitgestellt werden, die für sterile Verpackungsanwendungen, insbesondere im medizinischen Bereich, geeignet sind. Das Verpackungsmaterial soll eine hohe Barrierefunktion gegen Keime wie Bakterien oder Viren aufweisen. Darüber hinaus soll es bei Standardsterilisationsprozessen, wie z.B. der Sterilisation durch hochenergetische Strahlung, insbesondere γ-Strahlung, unter Hochtemperatur oder Druck, und/oder durch Behandlung mit reaktiven Chemikalien, wie z.B. Ethylenoxid, stabil sein. Außerdem soll es auch eine hohe mechanische Festigkeit aufweisen, so dass es nicht zu Beschädigungen wie Bruch, Riss oder Delamination im Produktionsprozess oder bei der Handhabung neigt. Zusätzlich soll das Verpackungsmaterial relativ gleichmäßig sein und insbesondere eine enge Porengrößenverteilung aufweisen.

Weiterhin soll das Verpackungsmaterial eine hohe plastische Verformbarkeit aufweisen, so dass es bequem in Standardverpackungsmethoden und - anwendungen eingesetzt werden kann.

Ferner soll das Material durch einen Standardproduktionsprozess leicht verfügbar sein. Schließlich soll es insbesondere aus Kosten- und Umweltgründen leichtgewichtig und in einem einfachen, energie- und ressourceneffizienten Prozess verfügbar sein.

Diese Aufgabe wird gelöst durch die Verwendung eines Verbundmaterials umfassend
a) eine Barrierelage,
b) eine, ein Spinnvlies umfassende Trägerlage, die auf mindestens einer Seite der Barrierelage angeordnet und mit der Barrierelage durch Hitze und Druck verbunden ist,
wobei die Barrierelage einen Vliesstoff umfasst, der 1 bis 70 Gew.% Meltblown-Fasern sowie 30 bis 99 Gew.% Stapelfasern, jeweils bezogen auf das Gesamtgewicht des Vliesstoffs enthält, als Verpackungsmaterial, insbesondere für sterile Verpackungsanwendungen, dadurch gekennzeichnet, dass die Barrierelage durch gemeinsames Ablegen der Stapelfasern mit den Meltblown-Fasern hergestellt ist.

Überraschend wurde erfindungsgemäß gefunden, dass mit dem Verbundmaterial die vorgenannten Nachteile im Stand der Technik überwunden werden können.

So zeichnet sich das Verbundmaterial durch eine hohe mechanische Festigkeit und Homogenität aus. Hierdurch kommt es bei seiner Verwendung als Verpackung nicht zu Beschädigungen wie Bruch, Riss oder Delamination im Produktionsprozess oder bei der Handhabung. Ferner zeigt es eine hohe Barrierefunktion gegen Keime wie Bakterien oder Viren. Darüber hinaus ist das Verbundmaterial bei den üblicherweise verwendeten Sterilisationsprozessen, wie z.B. der Sterilisation durch hochenergetische Strahlung, insbesondere γ-Strahlung, durch Erhitzen und/oder Druck, sowie durch Behandlung mit reaktiven Chemikalien, wie z.B. Ethylenoxid, stabil.

Zusätzlich zur hohen Stabilität des Verbundmaterials besitzt dieses eine hohe plastische Verformbarkeit, so dass es einfach in Standardverpackungsmethoden und -anwendungen eingesetzt werden kann. Auch die Verschweißbarkeit des Verbundmaterials ist sehr gut.

Ferner ist das Verbundmaterial in einem energie- und ressourcenschonenden Standardproduktionsprozess basierend auf einer Verarbeitung der Faserpolymere aus der Schmelze relativ einfach verfügbar.

Weiterhin weist das Verbundmaterial die für die Anwendung als Sterilverpackung geforderten Stabilitäts- und Barriereeigenschaften bereits bei geringen Flächengewichten auf, wodurch es, beispielsweise bei seinem Transport vergleichsweise geringe Kosten verursacht und einen geringen ökologischen Fußabdruck besitzt.

Aufgrund der vorgenannten vorteilhaften Eigenschaften eignet sich das Verbundmaterial hervorragend als Verpackungsmaterial, insbesondere für sterile Verpackungsanwendungen, bevorzugt im medizinischen Bereich.

Wie hierin verwendet, bezieht sich der Begriff "Verwendung des Verbundmaterials als Verpackungsmaterial" darauf, dass das Verbundmaterial dazu verwendet wird einen Gegenstand zumindest teilweise zu umschließen. Bei der "Verwendung für sterile Verpackungsanwendungen", wird das Verbundmaterial dazu verwendet, ihn steril von der Umgebung abzutrennen.

Vorzugsweise wird das Verpackungsmaterial dazu verwendet, den zu verpackenden Gegenstand vollständig zu umschließen. Vorzugsweise wird der Gegenstand in das Verbundmaterial eingesiegelt. Dann gibt es keine Löcher oder andere Öffnungen in der Verpackung, durch die der Gegenstand noch in direktem Kontakt mit der Umgebung stehen würde.

Das Verbundmaterial kann speziell für Verpackungszwecke konfiguriert werden. So kann es beispielsweise durch verschiedenste Formgebungsverfahren konfektioniert oder durch Kombination mit funktionalen Mitteln für eine Verpackungsanwendung, wie beispielsweise ein Etikett, ausgestattet werden. Hierdurch wird eine Verpackung erhalten.

Wie hierin verwendet, bezieht sich der Begriff "Verpackung" mithin auf ein Material, das zum Verpacken eines Gegenstands konfiguriert ist. Die Verpackung kann den zu verpackenden Gegenstand bereits enthalten oder noch nicht. Die Verpackung kann an die Form des zu verpackenden Gegenstands angepasst sein. Sie umfasst das Verbundmaterial und kann andere funktionelle Mittel für eine Verpackungsanwendung umfassen, wie beispielsweise Etiketten oder Mittel zum Verriegeln oder Verschließen. Der in der Verpackung verpackte Gegenstand wird als verpackter Artikel bezeichnet.

Eine Ausführungsform der Erfindung ist mithin auf eine Verpackung, insbesondere eine sterile Verpackung, gerichtet, umfassend ein Verbundmaterial wie hierin beschrieben.

Erfindungsgemäß eignet sich das Verbundmaterial insbesondere zur Herstellung von sterilen Verpackungen. Dabei bedeutet "steril", dass das Verbundmaterial und/oder die Verpackung mit oder ohne den zu verpackenden Gegenstand mit einer Standardsterilisationsmethode sterilisiert wurde. Typischerweise wird der Gegenstand in der Verpackung verpackt, bevor der verpackte Artikel sterilisiert wird. Der verpackte Artikel wird vorzugsweise so versiegelt, dass der Gegenstand nach der Sterilisation nicht verunreinigt werden kann, ohne die Verpackung zu beschädigen.

Erfindungsgemäß umfasst das Verbundmaterial eine Barrierelage, umfassend einen Vliesstoff, der 1 bis 70 Gew.% Meltblown-Fasern sowie 30 bis 99 Gew.% Stapelfasern enthält.

Der Vliesstoff kann durch Meltblowing hergestellt werden. Auf dem Gebiet der Vliesstoffe bezieht sich der Begriff "Meltblowing" im Wesentlichen auf einen Spinnprozess, bei dem thermoplastische faserbildende Polymere in einem Extruder geschmolzen, durch Matrizenlöcher gepumpt und beim Verlassen der Spinndüsen in Hochgeschwindigkeitsluftströme eintreten. Die Heißluftströme treten normalerweise an den Seiten der Düsen aus, führen die extrudierten Polymerströme und führen zur Bildung sehr feiner Filamente. Die Filamente werden auf einem Kollektorsieb abgeschieden, wodurch eine relativ feine, typischerweise selbstklebende Vliesbahn entsteht. Der Meltblowing-Prozess unterscheidet sich von der herkömmlichen Spinnvliestechnologie, bei der die entstehenden Polymerfasern nicht durch Heißluftströme aus Düsen in der Spinndüse geführt und dabei verstreckt werden, sondern normalerweise zunächst eine Abkühlung der Filamente durch kalte Luft erfolgt ehe die Fasern durch Absaugen auf ein Förderband gezogen werden.

Für die Meltblown-Fasern können alle synthetischen Polymere verwendet werden, die für die in der Technik bekannten Meltblowing-Verfahren geeignet sind. Typischerweise handelt es sich bei den Polymeren um thermoplastische Polymere, die extrudiert werden können. Vorzugsweise weisen die Meltblown-Fasern Polymere, ausgewählt aus Polyolefinen wie Polyethylen oder Polypropylen, aliphatischen Polyestern und aromatischen Polyestern wie Polyethylenterephthalat, Polybutylenterephthalat, Polyethylennaphthalat, Polycarbonat oder Polylactat, aliphatischen Polyamiden und aromatischen Polyamiden wie Polyamid 6 oder Polyamid 6.6, halogenierte Polymeren wie Polyvinylidenchlorid oder Polyvinylidenfluorid oder (Meth)acrylate wie Polymethylmethacrylat, Mischungen oder Copolymere hiervon auf. Mögliche Copolymere sind zum Beispiel Copolyester, Copolyamide, Polyesterpolyamide und Polyolefincopolymere.

Wie hierin verwendet bezieht sich der Begriff "Stapelfasern" auf diskontinuierliche Fasern mit Längen von 0,5 mm bis 100 mm und schließt damit Kurzfasern im Längenbereich 0,5 bis 20 mm mit ein. In einer bevorzugten Ausführungsform weist das Verbundmaterial Stapelfasern mit Durchmessern von 5 bis 30 µm, besonders bevorzugt 10 bis 20 µm, auf. In einer bevorzugten Ausführungsform weist das Verbundmaterial Stapelfasern mit Faserlängen von einem bis 60 mm, besonders bevorzugt 5 bis 40 mm auf.

Für die Stapelfasern können alle synthetischen Polymere verwendet werden, die für die in der Technik bekannten Herstellungsverfahren für Stapelfasern geeignet sind. Typischerweise handelt es sich bei den Polymeren um thermoplastische Polymere, die extrudiert werden können. Vorzugsweise weisen die Stapelfasern Polymere ausgewählt aus Polyolefinen wie Polyethylen oder Polypropylen, aliphatischen Polyestern und aromatischen Polyestern wie Polyethylenterephthalat, Polybutylenterephthalat, Polyethylennaphthalat, Polycarbonat oder Polylactat, aliphatischen Polyamiden und aromatischen Polyamiden wie Polyamid 6 oder Polyamid 6.6, halogenierte Polymeren wie Polyvinylidenchlorid oder Polyvinylidenfluorid oder (Meth)acrylate wie Polymethylmethacrylat, Mischungen oder Copolymeren hiervon auf. Mögliche Copolymere sind zum Beispiel Copolyester, Copolyamide, Polyesterpolyamide und Polyolefincopolymere. Ebenfalls denkbar ist die Verwendung von nichtthermoplastischen Polymerfasern, wie insbesondere Viskose-, Polyacrylnitril- oder Naturfasern, wie Baumwoll- oder Zellstofffasern.

Zur Herstellung des Spinnvlieses können alle synthetischen Polymere verwendet werden, die für die in der Technik bekannten Herstellungsverfahren für Spinnvliese geeignet sind. Typischerweise handelt es sich bei den Polymeren um thermoplastische Polymere, die extrudiert werden können. Erfindungsgemäß weist das Spinnvlies Spinnvliesfasern auf, die hier auch Fasern des Spinnvlieses genannt werden. Vorzugsweise weisen die Spinnvliesfasern Polymere, ausgewählt aus Polyolefinen wie Polyethylen oder Polypropylen, aliphatischen Polyestern und aromatischen Polyestern wie Polyethylenterephthalat, Polybutylenterephthalat, Polyethylennaphthalat, Polycarbonat oder Polylactat, aliphatischen Polyamiden und aromatischen Polyamiden wie Polyamid 6 oder Polyamid 6.6, halogenierte Polymeren wie Polyvinylidenchlorid oder Polyvinylidenfluorid oder (Meth)acrylate wie Polymethylmethacrylat, Mischungen oder Copolymeren hiervon auf. Mögliche Copolymere sind zum Beispiel Copolyester, Copolyamide, Polyesterpolyamide und Polyolefincopolymere.

In einer bevorzugten Ausführungsform umfassen die Fasern, d. h. die Meltblown-Fasern, Stapelfasern und/oder die Fasern des Spinnvlieses mindestens ein Polymer, ausgewählt aus Polyestern. Diese Materialien sind besonders für sterile Verpackungsanwendungen geeignet, da sie für die Sterilisation mit γ-Strahlung und/oder bei relativ hohen Temperaturen ausreichend stabil sind. Unter den Polyestern wird insbesondere Polybutylenterephthalat und/oder Polyethylenterephthalat bevorzugt. Ebenfalls bevorzugt umfassen die Fasern, d. h. die Meltblown-Fasern, Stapelfasern und/oder die Fasern des Spinnvlieses mindestens ein Polymer, ausgewählt aus Polyolefinen insbesondere Polypropylen. Diese Materialien sind besonders geeignet, da sie ebenfalls relativ temperaturbeständig sind.

Sowohl die Stapelfasern, als auch die Spinnvliesfasern können zumindest anteilig Bindefasern, sein. Dabei ist unter dem Begriff Bindefasern zu verstehen, dass die Fasern durch ihr thermoplastisches Verhalten im Verbundmaterial adhäsive Faserbindungen ermöglichen. Typischerweise sind die Bindefasern im Verbundmaterial mit sich selbst und/oder anderen Fasern verschmolzen. Vorzugsweise weisen die Stapelfasern bezogen auf den Gesamtgehalt an Stapelfasern, zumindest zu 90 Gew. %, vorzugsweise von 95 Gew. % bis 100 Gew. % Stapelbindefasern auf. Ebenfalls bevorzugt weisen die Spinnvliesfasern bezogen auf den Gesamtgehalt an Spinnvliesfasern, zumindest zu 90 Gew. % vorzugsweise von 95 Gew. %bis 100 Gew. % Spinnvliesbindefasern auf.

In einer besonders bevorzugten Ausführungsform der Erfindung umfasst das Verbundmaterial sowohl Spinnvliesbindefasern als auch Stapelbindefasern. Hierdurch kann eine besonders gute Einstellung der Haftung der Fasern bzw. der Lagen im Verbundmaterial erzielt werden.

Die Stapelbindefasern und/oder die Spinnvliesbindefasern können einheitliche Fasern oder auch Mehrkomponentenfasern sein. Erfindungsgemäß besonders bevorzugt sind die Stapelbindefasern und/oder die Spinnvliesbindefasern unabhängig voneinander Bindefasern mit einem Schmelzpunkt von zumindest einer Komponente, der unterhalb von 300°C liegt und insbesondere von 70 bis 230°C, besonders bevorzugt von 125 bis 200°C beträgt. Vorzugsweise umfassen die Stapelbindefasern und/oder die Spinnvliesbindefasern unabhängig voneinander thermoplastische Polyester und/oder Copolyester, insbesondere Polybutylenterephthalat, Polyolefine, insbesondere Polypropylen, Polyamide, Polyvinylalkohol, oder auch Copolymere sowie deren Copolymere und Gemische.

Erfindungsgemäß besonders bevorzugt sind die Stapelbindefasern und/oder die Spinnvliesbindefasern unabhängig voneinander Mehrkomponentenfasern, vorzugsweise Bikomponentenfasern, insbesondere Kern/Mantel-Fasern. Kern/Mantel-Fasern enthalten mindestens zwei Faserpolymere mit unterschiedlicher Erweichungs- und/oder Schmelztemperatur. Bevorzugt bestehen die Kern/Mantel-Fasern aus diesen zwei Faserpolymeren. Dabei ist diejenige Komponente, die die niedrigere Erweichungs- und/oder Schmelztemperatur aufweist, an der Faseroberfläche (Mantel) und diejenige Komponente, die die höhere Erweichungs- und/oder Schmelztemperatur aufweist, im Kern zu finden. In einer besonders bevorzugten Ausführungsform sind sowohl die Stapelbindefasern als auch die Spinnvliesbindefasern Bikomponentenfasern. Weiter bevorzugt weisen die Stapelbindefasern und/oder die Spinnvliesbindefasern unabhängig voneinander einen Mantel mit einem Schmelzpunkt, der unterhalb von 300°C liegt und insbesondere von 70 bis 230°C, besonders bevorzugt von 125 bis 200°C beträgt, auf.

Bei Kern/Mantel-Fasern kann die Bindefunktion durch die Polymere, die an der Oberfläche der Fasern angeordnet sind, ausgeübt werden. Für den Mantel können die verschiedensten Polymere eingesetzt werden. Bevorzugte Polymere für den Mantel sind erfindungsgemäß Polybutylenterephthalat (PBT), Polyamid (PA), Polyethylen (PE), Copolyamide und/oder auch Copolyester. Für den Kern können ebenfalls die verschiedensten Polymere eingesetzt werden. Bevorzugte Materialien für den Kern sind erfindungsgemäß Polyester (PES), insbesondere Polyetylenterephthalat (PET) und/oder Polyethylennaphthalat (PEN) und/oder Polyolefine (PO).

Die Verwendung von Kern-Mantel-Bindefasern ist erfindungsgemäß bevorzugt, da so eine besonders homogene Verteilung der Bindemittelkomponente im Vliesstoff sowie auch im Verbundmaterial erzielt werden kann.

Weitere bevorzugte Bikomponentenfasern sind sogenannte "Side-by-side" (Seite an Seite)-Fasern. Die "Side-by-side"-Fasern enthalten zwei, sich in Faserrichtung erstreckende, Segmente, die Faserpolymere mit unterschiedlicher Erweichungs- und/oder Schmelztemperatur aufweisen. Dabei können die Segmente gleichmäßig oder ungleichmäßig, beispielsweise exzentrisch angeordnet sein. Ebenfalls denkbar sind "Island-in-the-sea"-Fasern.

Vorzugsweise weisen die Kern/Mantel- und/oder "Side-by-side"-Fasern Faserpolymere auf, die sich in ihrer Erweichungs- und/oder Schmelztemperatur um mindestens 5 °C, noch bevorzugter 10 °C und insbesondere um mehr als 20 °C unterscheiden.

Ebenfalls denkbar ist auch die Verwendung von Monokomponenten Bindefasern, sofern diese zumindest teilweise thermisch verschmolzen werden können. Die Wahl der Monokomponenten Bindefasern hängt dabei von der eingesetzten Matrixfaser ab. Beispielsweise eignen sich Polyamid 6 Bindefasern für die Bindung von Polyamid 6.6 Matrixfasern und Copolyester für die Bindung von Polyetylenterephthalat.

In einer weiteren bevorzugten Ausführungsform der Erfindung ist die Schmelz- und /oder Zersetzungstemperatur der Faserpolymere zumindest einer Faserart, das heißt der Meltblown-, Stapel- und/oder Spinnvliesfasern, relativ hoch.

Vorzugsweise liegt die Schmelz- und/oder Zersetzungstemperatur der Faserpolymere der Meltblown-Fasern über 140°C, beispielsweise 160 bis 400 °C, vorzugsweise über 180°C, beispielsweise 180 bis 400 °C, oder über 200°C, beispielsweise 200 bis 400 °C. Eine solche Schmelztemperatur ist auch für das Verschließen der Verpackung von Vorteil, da sie eine Stabilität des Grundmaterials beispielsweise bei der thermischen Versiegelung mit einem anderen Material gewährleistet.

Ebenfalls bevorzugt ist die Schmelz- und /oder Zersetzungstemperatur der Faserpolymere zumindest einer Faserkomponente der Stapel- und/oder Spinnvliesbindefasern, insbesondere des Kerns der Stapel- und/oder Spinnvliesbindefasern, wenn sie als Kern/Mantelfasern ausgebildet sind, über 140°C, beispielsweise 160 bis 400 °C, vorzugsweise über 180°C, beispielsweise 180 bis 400 °C, oder über 200°C, beispielsweise 200 bis 400 °C. Eine solche Schmelztemperatur ist auch für das Verschließen der Verpackung von Vorteil, da sie eine Stabilität des Grundmaterials beispielsweise bei der thermischen Versiegelung mit einem anderen Material gewährleistet.

In einer Ausführungsform der Erfindung liegen die Meltblown-Fasern und die Stapelfasern der Barrierelage im Vliesstoff gleichmäßig verteilt vor.

Die Meltblown-Fasern im erfindungsgemäßen Verbundmaterial weisen, jeweils bezogen auf das Gesamtgewicht der Meltblown-Fasern, vorzugsweise zu mindestens 60 Gew.% , beispielsweise 60 bis 100 Gew.%, noch bevorzugter mindestens 70 Gew.%, beispielsweise 70 bis 100 Gew.%, einen Faserdurchmesser von 0,1 bis 50 µm, noch bevorzugter 0,3 bis 30 µm und insbesondere 0,5 bis 10 µm auf.

Die Stapelfasern im erfindungsgemäßen Verbundmaterial weisen vorzugsweise mittlere Faserdurchmesser von 5 bis 50 µm, noch bevorzugter 7 bis 20 µm auf.

Es können jedoch auch Fasern mit geringeren Faserdurchmessern enthalten sein, z. B. Nanocellulose mit Faserdurchmessern von weniger als 100 nm. Darüber hinaus sind auch Stapelfasern mit Faserdurchmessern von mehr als 50 µm möglich. Die Spinnvliesfasern im erfindungsgemäßen Verbundmaterial weisen vorzugsweise mittlere Faserdurchmesser von 5 bis 100 µm, besonders bevorzugt 10 bis 50 µm auf.

Erfindungsgemäß ist die Barrierelage hergestellt durch gemeinsames Ablegen der Stapelfasern mit den Meltblown-Fasern.

Dies ist vorteilhaft, da hierdurch der Barrierelage eine besonders hohe Homogenität verliehen wird. Dabei werden die Stapelfasern und die Meltblown-Fasern vorzugsweise auf die Trägerlage abgelegt. Dies ist vorteilhaft, da hierdurch ein besonders inniger Kontakt und damit auch eine besonders gute Verbindung der Lagen ermöglicht wird. Besonders bevorzugt ist die Barrierelage hergestellt durch Einblasen der Stapelfasern in den Meltblown-Strom, der auf der Trägerlage abgelegt wird.

Erfindungsgemäß bevorzugt sind Barrierelage und Trägerlage durch Hitze und Druck miteinander verbunden. Wie in der Technik bekannt, kann eine solche thermische Bindung so durchgeführt werden, dass die Grundfaserstruktur der beiden Lagen zumindest teilweise erhalten bleibt. Dabei wird nur so viel thermische Energie eingebracht, dass die Fasern nicht vollständig geschmolzen, sondern nur erweicht werden, wobei Bindungsstellen im gesamten Verbundmaterial entstehen.

Erfindungsgemäß bevorzugt wird das Verbundmaterial hergestellt durch ein Verfahren umfassend folgende Verfahrensschritte
a) Herstellung einer Barrierelage, umfassend einen Vliesstoff, der 1 bis 70 Gew.% Meltblown-Fasern sowie 30 bis 99 Gew.% Stapelfasern enthält,
b) Anordnung mindestens einer, ein Spinnvlies umfassenden, Trägerlage, auf mindestens eine Seite der Barrierelage
c) Verbinden von Barrierelage und Trägerlage mittels Hitze und Druck.

In einer bevorzugten Ausführungsform erfolgt die thermische Verbindung durch Kalandrieren. Bei diesem Standardverfahren wird ein Vliesstoff durch ein Paar Kalanderwalzen geleitet, die typischerweise erwärmt werden. Die Bedingungen des Kalandrierschrittes sind vorzugsweise so eingestellt, dass nur ein teilweises Schmelzen der Fasern stattfindet, so dass das Vlies in einem gewünschten Umfang thermisch gebunden wird. Die Menge an Haftung und Klebkraft kann beispielsweise durch Änderung der Geschwindigkeit der Kalanderwalzen, des Drucks, des Abstandes zwischen den Walzenspalten und der Temperatur eingestellt werden. Dadurch ist es möglich, einen Grad der thermischen Verbindung so zu erhalten, dass eine gewünschte mechanische Festigkeit erreicht wird, wodurch die grundlegende Faserstruktur, insbesondere im Kern des Vliesstoffes, im Wesentlichen erhalten oder zumindest in einem gewünschten Grad gehalten werden kann. So kann beispielsweise der Verbund von Barrierelage und Trägerlage mit einem Paar Kalanderwalzen mit einer oder mehrerer der folgenden Einstellungen kalandriert werden:
- eine Geschwindigkeit der Rollen zwischen 1 und 200 m/min, vorzugsweise zwischen 50 und 180 m/min,
- einen Liniendruck auf die Rollen zwischen 1 und 1000 N/mm bar, vorzugsweise zwischen 50 und 500 N/mm bar,
- einen Abstand zwischen den Walzenspalten zwischen 0,01 mm und 5 mm, vorzugsweise zwischen 0,001 mm und 3 mm,
- eine Temperatur der Rollen zwischen 10°C und 400°C, vorzugsweise zwischen 150°C und 280°C.

Das Kalandrieren kann über die gesamte Oberfläche von Barrierelage und/oder Trägerlage oder Teile davon erfolgen, wenn die Walzenoberfläche gemustert ist. Erfindungsgemäß wird die Kalandrierung für die thermische Verfestigung bevorzugt, da die mechanische Festigkeit des Vliesstoffes und des gesamten Verbundmaterials erhöht werden kann, während die Faserstruktur des Vliesstoffes im Wesentlichen erhalten bleibt.

In einer bevorzugten Ausführungsform liegt das Flächengewicht des Verbundmaterials zwischen 10 g/m² und 200 g/m². Vorzugsweise liegt das Flächengewicht zwischen 20 und 140 g/m², noch bevorzugter zwischen 50 g/m² und 120 g/m². Vorzugsweise ist das Flächengewicht nicht höher als 200 g/m², vorzugsweise nicht höher als 140 g/m² und insbesondere nicht höher als 120 g/m² oder sogar 100 g/m². Vorzugsweise beträgt das Flächengewicht mindestens 10 g/m² oder mindestens 20 g/m² oder in einer bestimmten Ausführungsform mindestens 50 g/m². Erfindungsgemäß wird das Flächengewicht nach DIN ISO 9073-1 (1989) gemessen. Das Flächengewicht wird vorzugsweise so eingestellt, dass die Verpackung die jeweils erforderliche mechanische Festigkeit und Barrierefunktion aufweist.

In einer bevorzugten Ausführungsform beträgt die Zugfestigkeit des Verbundmaterials in Maschinen- und Querrichtung mindestens 100 N/5 cm. Die Zugfestigkeit beträgt vorzugsweise mindestens 125 N/5 cm, vorzugsweise mindestens 150 N/5 cm. Die Zugfestigkeit liegt vorzugsweise im Bereich von 100 N/5 cm bis 600 N/5 cm und speziell im Bereich von 150 N/5 cm bis 500 N/5 cm. Die Zugfestigkeit wird nach ISO 1924-2 (2009) bestimmt. Auch die Zugfestigkeit ist ein Indikator für die Eignung als Verpackung, insbesondere für medizinische Sterilverpackungen. Die hohe Zugfestigkeit zeigt, dass das Material für die Sterilisation und typische Verpackungsanwendungen geeignet ist.

In einer bevorzugten Ausführungsform beträgt die Dehnung des Verbundmaterials in Maschinen- und Querrichtung mindestens 5%. Vorzugsweise beträgt die Dehnung mindestens 10%, noch bevorzugter mindestens 20%. Vorzugsweise liegt die Dehnung im Bereich von 5% bis 50%, bevorzugter zwischen 10% und 40%, am besten zwischen 20% und 30%. Die Dehnung wird nach ISO 1924-2 (2009) bestimmt. Eine so hohe Dehnung ist von Vorteil, da das Vlies eine ausreichende Flexibilität und elastische sowie plastische Verformbarkeit aufweist, die für Standard-Verpackungsanwendungen erforderlich ist. Die Flexibilität verleiht dem Verpackungsmaterial zusätzliche Stabilität und reduziert das Risiko von Beschädigungen, zum Bespiel durch Durchstoßen. Nach der Erfindung ist es besonders vorteilhaft, dass die hohe Flexibilität erreicht werden kann, obwohl die mechanische Festigkeit hoch und die Luftdurchlässigkeit hoch ist. Nach dem Stand der Technik, z.B. bei flashgesponnenen porösen Platten für medizinische Anwendungen, ist es schwierig, eine hohe Luftdurchlässigkeit mit einer hohen mechanischen Festigkeit und Flexibilität zu kombinieren. Typischerweise weisen poröse Platten, die im Stand der Technik verwendet werden, eine relativ geringe Flexibilität auf, wie sie durch die Dehnung angezeigt wird.

In einer bevorzugten Ausführungsform beträgt die Reißfestigkeit des Verbundmaterials in Maschinen- und Querrichtung mindestens 1 N. Die Reißfestigkeit beträgt vorzugsweise mindestens 1,5 N, vorzugsweise mindestens 2 N. Die Reißfestigkeit liegt vorzugsweise im Bereich von 1 N cm bis 5 N und speziell im Bereich von 2 N bis 4 N. Die Reißfestigkeit wird nach EN21974 (1994) bestimmt.

In einer bevorzugten Ausführungsform beträgt die Dicke des Verbundmaterials in Maschinen- und Querrichtung mindestens 50µm. Die Dicke beträgt vorzugsweise mindestens 100µm, vorzugsweise mindestens 150µm. Die Dicke liegt vorzugsweise im Bereich von 100µm bis 500µm und speziell im Bereich von 150µm bis 300µm. Die Dicke wird nach EN ISO 534 (2012) bestimmt.

In einer bevorzugten Ausführungsform beträgt die Durchstoßfestigkeit des Verbundmaterials in Maschinen- und Querrichtung mindestens 5000 J/m². Die Durchstoßfestigkeit beträgt vorzugsweise mindestens 6000 J/m², vorzugsweise mindestens 7000 J/m². Die Durchstoßfestigkeit liegt vorzugsweise im Bereich von 2000 J/m² bis 10000 J/m²und speziell im Bereich von 6000 J/m² bis 9000 J/m². Die Durchstoßfestigkeit wird nach ASTM D3420 (1994) bestimmt. In einer bevorzugten Ausführungsform beträgt die mittlere Porengröße des Verbundmaterials gemessen nach DIN ASTM E1294 (1999) mindestens 0,5 µm, vorzugsweise mindestens 1 µm. Die mittlere Porengröße liegt vorzugsweise im Bereich von 1 µm bis 15 µm und speziell im Bereich von 2 µm bis 10 µm. Liegt die mittlere Porengröße unter 0,5 µm, so werden in der Regel schlechtere Sterilisationsgrade erzielt und wenn die mittlere Porengröße mehr als 20 µm ist die Wahrscheinlichkeit für den durchtritt von Bakterien/Viren zu groß.

Vorzugsweise beträgt die Berstfestigkeit gemessen nach ISO 2758 (2014) des Verbundmaterials mindestens 200 kPa, vorzugsweise mindestens 500 kPa, bevorzugter mindestens 700 kPa. Die Berstfestigkeit des Verbundmaterials kann unter 2000 kPa oder unter 1500 kPa liegen. Vorzugsweise liegt die Berstfestigkeit im Bereich von 200 kPa bis 2000 kPa, vorzugsweise 300 kPa bis 1500 kPa oder 500 kPa bis 1500 kPa. Es wurde festgestellt, dass die erfinderischen Verpackungen eine hohe Berstfestigkeit aufweisen. Die Berstfestigkeit ist ein Indikator für die mechanische Stabilität einer eines für Verpackungsanwendungen geeigneten Materials unter Druck. Für Sterilisationsanwendungen unter Vakuum ist eine hohe Berstfestigkeit erforderlich. In Sterilisationsanwendungen kann eine Verpackung während der Injektion von Sterilisationsgasen einem Druck ausgesetzt werden, gefolgt von der Entfernung der Gase. Die hohe Berstfestigkeit des erfinderischen Verbundmaterials zeigt an, dass er für solche Standardsterilisationsverfahren geeignet ist.

In einer bevorzugten Ausführungsform beträgt die Luftdurchlässigkeit des Verbundmaterials mindestens 200 mL/min. Vorzugsweise beträgt die Luftdurchlässigkeit mindestens 300 ml/min, am besten mindestens 400 ml/min. Insbesondere liegt die Luftdurchlässigkeit im Bereich von 200 ml/min bis 1.000 ml/min, oder speziell im Bereich von 300 ml/min bis 800 ml/min. Die Luftdurchlässigkeit wird vorzugsweise nach ISO 5636-3 (2013; Bendtsen-Test) bestimmt. Eine hohe Luftdurchlässigkeit ist insbesondere bei Standardsterilisationsverfahren erforderlich, bei denen eine Verpackung mit gasförmigen Chemikalien oder Dampf sterilisiert wird. In einem solchen Prozess, beispielsweise mit Ethylenoxid, wird die Verpackung versiegelt und der verpackte Gegenstand einer Sterilisationsbehandlung unterzogen, bei der das Sterilisationsmittel in die Verpackung eindringt. Es wurde festgestellt, dass das nach der Erfindung verwendete Verbundmaterial eine ausreichende Durchlässigkeit für solche Sterilisationsverfahren aufweist.

In einer bevorzugten Ausführungsform ist das Verbundmaterial bedruckbar. Daher kann es in einem einfachen Druckverfahren mit Etiketten, Tags oder dergleichen gekennzeichnet werden.

In einer bevorzugten Ausführungsform ist das Verbundmaterial bei relativ hohen Temperaturen stabil. Vorzugsweise ist die Verpackung bei Temperaturen von bis zu 140°C, vorzugsweise bis zu 200°C oder sogar bis zu 220°C stabil. Das bedeutet, dass die Struktur nicht wesentlich gestört wird und die Polymere bei einer solchen Temperatur nicht geschmolzen werden. Solche thermostabilen Verbundmaterialien können bei hohen Temperaturen sterilisiert werden, was für verschiedene Sterilisationsanwendungen von großem Vorteil ist.

Gegenstand der Erfindung ist auch eine Verpackung, insbesondere eine sterile Verpackung, umfassend ein Verbundmaterial wie hierin beschrieben. Dabei sind die im Bezug auf die erfinderische Verwendung beschriebenen bevorzugten Ausführungsformen auch bevorzugte Ausführungsformen für die erfinderische Verpackung.

In einer bevorzugten Ausführungsform ist und/oder wird eine aus dem Verbundmaterial erhaltene Verpackung durch γ-Strahlung (Gammastrahlung) sterilisiert. Dieser Prozess wird auch als γ-Röntgensterilisation bezeichnet. Gammastrahlen sind hochenergetisch und dafür bekannt, Substrate mit geringer mechanischer Festigkeit chemisch zu modifizieren oder zu zerstören. Die Verpackung kann jedoch mit einer hohen mechanischen Festigkeit versehen werden, so dass sie einer effizienten Sterilisation durch γ-Strahlung unterzogen werden kann.

In einer bevorzugten Ausführungsform ist die Verpackung eine medizinische Verpackung. Der Begriff "medizinische Verpackung" bezieht sich auf alle Sterilverpackungen, die speziell im technischen Bereich der Pharmazie und des Gesundheitswesens benötigt werden. So kann beispielsweise eine medizinische Verpackung einen verpackten Gegenstand umfassen, der eine pharmazeutische Zusammensetzung, wie beispielsweise ein Medikament oder eine Flüssigkeit, oder eine medizinische Vorrichtung, wie beispielsweise einen Katheter, eine Spritze, einen Wundverband oder dergleichen ist. In der medizinischen Verpackung besteht ein hoher Bedarf an sicherem und kosteneffizientem sterilen Verpackungsmaterial, da grundsätzlich alle relevanten Geräte und pharmazeutischen Zusammensetzungen in steriler Form bereitgestellt und gewartet werden müssen. Darüber hinaus besteht ein hoher Bedarf an leichten, einfachen Verpackungen im medizinischen Bereich. Die erfindungsgemäße Verpackung eignet sich hervorragend für solche Anforderungen, da sie verschiedene vorteilhafte Eigenschaften vereint, wie hohe mechanische Festigkeit, hohe Barrierefunktion durch geringe Porosität, gute Luftdurchlässigkeit, geringes Gewicht und relativ einfache Herstellung. Insbesondere ist das Material stark genug für die Standardsterilisation durch γ-Strahlung, Dampf oder Chemikalien.

Beschrieben ist auch ein verpackter Gegenstand, der mit einem Verbundmaterial wie hierin beschrieben verpackt ist. Gegenstand der Erfindung ist auch die hierin beschriebene Verwendung des Verbundmaterials zum Verpacken eines Gegenstandes. Vorzugsweise ist der Gegenstand ein medizinischer Gegenstand und das Verbundmaterial ist als medizinische Verpackung ausgestaltet. In einer anderen Ausführungsform ist der Gegenstand ein kosmetischer Gegenstand und die Verpackung ist eine kosmetische Verpackung. Vorzugsweise ist der Gegenstand ein steriler Gegenstand und die Verpackung ist eine sterile Verpackung.

Grundsätzlich gilt die erfinderische Verwendung für die Verpackung aller Gegenstände, insbesondere eines medizinischen Gegenstandes, der mit dem Verbundmaterial verpackt und anschließend sterilisiert wird. Der verpackte medizinische Gegenstand kann eine Zusammensetzung oder ein Gerät sein. So könnte die Zusammensetzung beispielsweise eine pharmazeutische Zusammensetzung, wie beispielsweise ein Medikament, oder ein anderes festes oder flüssiges Mittel oder eine Zusammensetzung sein, die im medizinischen Bereich verwendet wird. Das Gerät kann ein Einwegartikel sein, wie beispielsweise eine Spritze oder ein Wundverband. Vorzugsweise wird der medizinische Gegenstand bei einer medizinischen Behandlung, wie z.B. Therapie, Diagnose oder Operation, verwendet.

Gegenstand der Erfindung ist auch ein Verfahren zum Bereitstellen eines verpackten Gegenstands, umfassend
(a) Bereitstellen des Gegenstands und eines Verbundmaterials, umfassend
   - eine Barrierelage,
   - eine, ein Spinnvlies umfassende Trägerlage, die auf mindestens einer Seite der Barrierelage angeordnet und mit der Barrierelage durch Hitze und Druck verbunden ist, wobei die Barrierelage einen Vliesstoff umfasst, der 1 bis 70 Gew.% Meltblown-Fasern sowie 30 bis 99 Gew.% Stapelfasern, jeweils bezogen auf das Gesamtgewicht des Vliesstoffs enthält, wobei die Barrierelage durch gemeinsames Ablegen der Stapelfasern mit den Meltblown-Fasern hergestellt ist.
b) Verpacken des Gegenstands im Verbundmaterial und
(c) gegebenenfalls Sterilisieren des verpackten Gegenstands.

Das Verfahren ist auch ein Verfahren zum Bereitstellen eines verpackten Gegenstands. Vorzugsweise ist der verpackte Gegenstand ein medizinischer Gegenstand, wie oben beschrieben. Das Verfahren ist auch ein Verfahren zum Sterilisieren eines verpackten Gegenstands, wenn Schritt (c) angewendet wird. Vorzugsweise wird die Verpackung in Schritt (b) so ausgeführt, dass der Gegenstand versiegelt wird, d.h. durch die Verpackung vollständig von der Umgebung abgeschirmt ist.

In einer bevorzugten Ausführungsform umfasst das Verfahren vor Schritt (a) die Schritte von
(a1) Herstellen der Trägerlage in einem Spinnvlies-Verfahren sowie Herstellen der Barrierelage in einem Meltblow-Verfahren mit gleichzeitiger Ablage der Stapelfasern mit den Meltblown-Fasern und
(a2) thermisches Verbinden der Barrierelage mit der Trägerlage auf mindestens einer Seite der Barrierelage, um das Verbundmaterial zu erhalten.

Vorzugsweise werden die Stapelfasern und die Meltblown-Fasern in Schritt (a1) miteinander vermischt indem die Stapelfasern in einen Meltblown-Faserstrom eingeblasen werden.

Nach Schritt (a2) kann das Verbundmaterial durch weitere Schritte, z.B. durch Anbringen eines Etiketts, in die Verpackung umgewandelt werden. In einer bevorzugten Ausführungsform werden die Schritte (a1) bis (b) und optional mit zusätzlichem Schritt (c) in einem einzigen Prozess nacheinander ausgeführt. Alternativ kann ein Verbundmaterial nach den Schritten (a1) und (a2) erhalten werden, während die Verpackung eines Gegenstands separat erfolgt, z.B. durch einen Lieferanten von medizinischen Artikeln.

Die im Bezug auf die erfinderische Verwendung beschriebenen bevorzugten Ausführungsformen sind auch bevorzugte Ausführungsformen für das erfinderische Verfahren.

Die erfinderischen Verwendungen, Verpackungen und Verfahren lösen das der Erfindung zugrunde liegende Problem. Das Verbundmaterial ist für die sterile Verpackung von Gegenständen, wie z.B. medizinischen Artikeln, geeignet. Das Verbundmaterial hat eine hohe mechanische Festigkeit und eine hohe Barrierefunktion gegen Keime wie Bakterien oder Viren. Das Verbundmaterial weist eine ausreichende Stabilität auf, die für Standardsterilisationsprozesse wie γ-Strahlung, Hochtemperaturbehandlung oder chemische Sterilisation geeignet ist. Es hat eine ausreichende Porosität für die Sterilisationsbehandlung mit Chemikalien. Seine mechanische Festigkeit und hohe elastische und plastische Verformbarkeit sind für Standardverpackungsverfahren und - anwendungen von großem Vorteil. Alle vorteilhaften Eigenschaften können mit einem Produkt mit einem relativ geringen Flächengewicht erreicht werden. Insgesamt eignet sich das Verbundmaterial für eine einfache und effiziente Verpackung von Gegenständen.

### Figurenbeschreibung

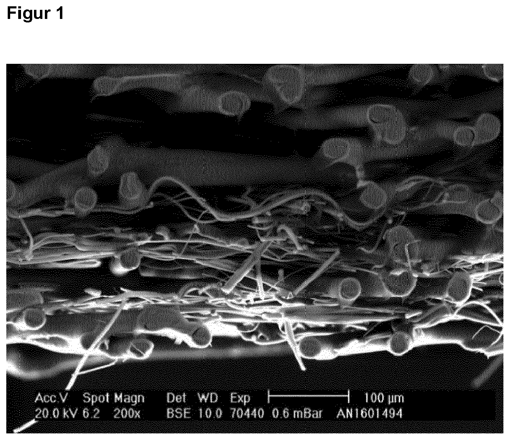

Figur 1 zeigt eine REM-Aufnahme des Querschnitts einer beispielhaften Barrierelage.

### Beispiele

Die erfindungsgemäßen Verbundmaterialien wurden hergestellt, wie im Folgenden beschrieben.

### Beispiel 1:

PET/CoPET Bico-Stapelbindefaser:
   Länge - 38 mm
   Feinheit - 2.2 dTex
   CoPET (Smp.) - 180°C
Meltblown PET:
   Faser-Durchmesser - 0.3 bis 2 µm
Spinnvlies-Bindefasern PET/CoPET:
   Faser-Durchmesser - 7 bis 30 µm
   CoPET (Smp.) - 180°C

Die homogen kardierten PET/CoPET Bico-Stapelfasern werden über einen Tertiärluftkanal (TAC) konstant in den Meltblown-Strom eingeblasen. Die Fasern vermischen sich mit dem Meltblown-PET-Faserstrom und werden mittels Absaugung auf das Spinnvlies abgelegt. Das resultierende Vlies wird dann durch ein Paar Kalanderwalzen komprimiert, wodurch ein homogen geformtes und aufgrund der hohen Temperaturstabilität zur Sterilisation geeignetes Verbundmaterial entsteht. Durch die Verwendung der Meltblown Fasern weist das Verbundmaterial relativ geringe Porengrößen auf, was zu einer guten Barrierewirkung gegenüber Viren und Bakterien führt. Nichtsdestotrotz zeigt das Verbundmaterial eine ausreichende Luftdurchlässigkeit, was für die Sterilisation wichtig ist.

### Beispiel 2:

PET/CoPET Bico-stapelfaser:
   Länge - 32 mm
   Feinheit - 1.7dTex
   CoPET (Smp.) - 180°C
Meltblown PET:
   Faser-Durchmesser - 0.3 bis 3 µm
Spinnvlies PET/CoPET:
   Faser-Durchmesser - 7 bis 30 µm
   CoPET (Smp.) - 180°C

Die homogen kardierten PET/CoPET Bico-stapelfasern werden über einen Tertiärluftkanal (TAC) konstant in den Meltblown-Strom eingeblasen. Die Fasern vermischen sich mit dem Meltblown-PET-Faserstrom und werden mittels Absaugung auf das Spinnvlies abgelegt. Das resultierende Vlies wird dann durch ein Paar Kalanderwalzen komprimiert, wodurch ein homogen geformtes und aufgrund der hohen Temperaturstabilität zur Sterilisation geeignetes Verbundmaterial entsteht. Durch die Verwendung der Meltblown Fasern weist das Verbundmaterial relativ geringe Porengrößen auf, was zu einer guten Barrierewirkung gegenüber Viren und Bakterien führt. Nichtsdestotrotz zeigt das Verbundmaterial eine ausreichende Luftdurchlässigkeit, was für die Sterilisation wichtig ist.

### Messmethoden:

Das Flächengewicht ist definiert als die Masse pro Flächeneinheit und wird in Gramm pro Quadratmeter (g/m²) gemessen. Das Flächengewicht von Vliesstoffen wird nach der Norm ISO 9073-1 (1989) gemessen.

Die Dicke von Vliesstoffen wird in µm nach der Norm EN ISO 534 (2012) gemessen.

Porengrößenmessungen von Vliesstoffen wurden mit einer Porous Materials Inc. durchgeführt. (PMI) Tester (Porous Materials Inc., US). Die Norm ASTM E 1294 (1989) wurde für die Messung der Porengröße von sterilen Verpackungsprodukten eingehalten. Die Porengrößenmessungen basierten auf der Verdrängung von Benetzungsflüssigkeit mit niedriger Oberflächenspannung (Marke GALDEN HT 230; Solvay, IT) aus einer Pore durch ein Gas.

Zugfestigkeit (Bruchfestigkeit) und Dehnung von Vliesstoffen wurden mit einer Zugfestigkeitsprüfmaschine nach ISO 1924-2 (2009) gemessen. Um die Zugfestigkeit und Dehnung des Vliesstoffs zu messen, wurden an verschiedenen Stellen der Probe fünf Streifen aus Maschinen- und Querrichtung (MD&CD) geschnitten. Die Schnittproben wurden auf die Klammern der Zugprüfmaschine gespannt und mit konstanter Streckgeschwindigkeit gezogen. Die Zugfestigkeit und Dehnung wurde dann für jede Probe aufgezeichnet und gemittelt.

Die Luftdurchlässigkeit von Vliesstoffen wurde nach der Norm ISO 5636-3 (2013; Bendtsen-Test) gemessen.

Die Reißfestigkeit von Vliesstoffen wurde gemäß der Europäischen Norm EN21974 (1994) bestimmt.

Die Berstfestigkeit von Vliesstoffen wurde mit dem Berstdruckmessgerät nach der Norm ISO 2758 (2014) gemessen.

Die Durchstoßfestigkeit von Vliesstoffen wird nach der Norm ASTM D3420 (1994) gemessen.

Die Messergebnisse für die erfindungsgemäßen Beispiele 1&2 sind in der folgenden Tabelle zusammengefasst und werden mit dem kommerziellen Produkt (Tyvek^{®}) verglichen.

| **Eigenschaften** | **Einheit** | **Norm** | **Tyvek^{®}** | **Beispiel 1** | **Beispiel 2** |
|---|---|---|---|---|---|
| **Flächengewicht** | **g/m2** | **EN ISO 536 (Tyvek) DIN ISO 9073-1** | **80** | **75** | **85** |
| **Dicke** | **µm** | **EN ISO 534** | **171** | **162** | **184** |
| **Polymer** | | | **HDPE** | **PET** | **PET** |
| **Thermische Stabilität** | **°C** | **DIN ISO 11357-3 (2013)** | **Bis zu 125°C** | **Bis zu 250°C** | **Bis zu 250°C** |
| **Zugfestigkeit** | **N/5cm** | **ISO 1924-2** | **174** | **162** | **182** |
| **Dehnung** | **%** | | **22** | **21** | **20** |
| **Porengrößenverteilung** | **µm** | **ASTM** | **2-8** | **1-10** | **1-10** |
| | | **E1294** | | | |
| **Reißfestigkeit** | **N** | **EN 21974** | **3.1** | **2.9** | **3.2** |
| **Durchstichfestigkeit** | **J/m²** | **ASTM D3420** | **8354** | **7974** | **8471** |
| **Berstfestigkeit** | **kPa** | **ISO 2758** | **1199** | **1241** | **1331** |
| **Luftdurchlässigkeit** | **mL/min** | **ISO 5636-3** | **542** | **579** | **514** |

Es zeigt sich, dass die erfindungsgemäßen Verbundmaterialien eine höhere thermische Stabilität als das Vergleichsmaterial haben bei vergleichbar guten mechanischen Eigenschaften und Porengrößenverteilung. Aufgrund der Verwendung von PET Material, kann das erfindungsgemäße Verbundmaterial gut sterilisiert und verschweißt werden. Dagegen ist die Lagenhaftung und die Bedruckbarkeit des Vergleichsprodukts schlechter.

## Patentansprüche

1. Verwendung eines Verbundmaterials umfassend
a) eine Barrierelage,
b) eine, ein Spinnvlies umfassende Trägerlage, die auf mindestens einer Seite der Barrierelage angeordnet und mit der Barrierelage durch Hitze und Druck verbunden ist,
wobei die Barrierelage einen Vliesstoff umfasst, der 1 bis 70 Gew.% Meltblown-Fasern sowie 30 bis 99 Gew.% Stapelfasern, jeweils bezogen auf das Gesamtgewicht des Vliesstoffs enthält, als Verpackungsmaterial, insbesondere für sterile Verpackungsanwendungen, **dadurch gekennzeichnet, dass** die Barrierelage durch gemeinsames Ablegen der Stapelfasern mit den Meltblown-Fasern hergestellt ist.

2. Verwendung nach Anspruch 1, **dadurch gekennzeichnet, dass** die die Meltblown-Fasern, die Stapelfasern und/oder die Fasern des Spinnvlieses mindestens ein Polymer, ausgewählt aus Polyestern, und/oder Polyolefine aufweisen.

3. Verwendung nach Anspruch 1 oder 2, **dadurch gekennzeichnet, dass** die Stapelfasern zumindest anteilig Stapelbindefasern und/oder die Fasern des Spinnvlieses zumindest anteilig Spinnvliesbindefasern sind, wobei das Verbundmaterial vorzugsweise sowohl Spinnvliesbindefasern als auch Stapelbindefasern aufweist.

4. Verwendung nach Anspruch 3, **dadurch gekennzeichnet, dass** die Stapelbindefasern und/oder die Spinnvliesbindefasern unabhängig voneinander Bikomponentenfasern, insbesondere Kern/Mantel-Fasern sind.

5. Verwendung nach einem oder mehreren der vorangehenden Ansprüche, **dadurch gekennzeichnet, dass** die Barrierelage hergestellt ist durch Einblasen der Stapelfasern in einen Meltblown-Strom, der auf der Trägerlage abgelegt wird.

6. Verwendung nach einem oder mehreren der vorangehenden Ansprüche, **dadurch gekennzeichnet, dass** das Flächengewicht des Verbundmaterials zwischen 10 g/m² und 200 g/m² beträgt.

7. Verwendung nach einem oder mehreren der vorangehenden Ansprüche, **dadurch gekennzeichnet, dass** die Dicke des Verbundmaterials in Maschinen- und Querrichtung mindestens 50µm beträgt.

8. Verwendung nach einem oder mehreren der vorangehenden Ansprüche, **dadurch gekennzeichnet, dass** die mittlere Porengröße des Verbundmaterials gemessen nach DIN ASTM E1294 (1999) im Bereich von 1 µm bis 15 µm liegt.

9. Verwendung nach einem oder mehreren der vorangehenden Ansprüche, **dadurch gekennzeichnet, dass** die Luftdurchlässigkeit des Verbundmaterials mindestens 200 mL/min beträgt.

10. Verwendung nach einem oder mehreren der vorangehenden Ansprüche, **dadurch gekennzeichnet, dass** Barrierelage und Trägerlage durch Hitze und Druck miteinander verbunden sind.

11. Verwendung nach einem oder mehreren der vorangehenden Ansprüche, **dadurch gekennzeichnet, dass** das Verbundmaterial als medizinische Verpackung ausgestaltet ist und das Verbundmaterial zum Verpacken eines medizinischen Gegenstands eingesetzt wird.

12. Verpackung, insbesondere sterile Verpackung, umfassend ein Verbundmaterial, das
a) eine Barrierelage umfasst, sowie
b) eine, ein Spinnvlies umfassende Trägerlage, die auf mindestens einer Seite der Barrierelage angeordnet und mit der Barrierelage durch Hitze und Druck verbunden ist,
wobei die Barrierelage einen Vliesstoff umfasst, der 1 bis 70 Gew.% Meltblown-Fasern sowie 30 bis 99 Gew.% Stapelfasern, jeweils bezogen auf das Gesamtgewicht des Vliesstoffs enthält, **dadurch gekennzeichnet, dass** die Barrierelage durch gemeinsames Ablegen der Stapelfasern mit den Meltblown-Fasern hergestellt ist.

13. Verpackung nach Anspruch 12, **dadurch gekennzeichnet, dass** die Meltblown-Fasern, die Stapelfasern und die Fasern des Spinnvlieses mindestens ein Polymer, ausgewählt aus Polyestern aufweisen .

14. Verfahren zum Bereitstellen eines verpackten Gegenstands, umfassend
(a) Bereitstellen des Gegenstands und eines Verbundmaterials, umfassend
- eine Barrierelage,
- eine, ein Spinnvlies umfassende Trägerlage, die auf mindestens einer Seite der Barrierelage angeordnet und mit der Barrierelage durch Hitze und Druck verbunden ist, wobei die Barrierelage einen Vliesstoff umfasst, der 1 bis 70 Gew.% Meltblown-Fasern sowie 30 bis 99 Gew.% Stapelfasern, jeweils bezogen auf das Gesamtgewicht des Vliesstoffs enthält, wobei die Barrierelage durch gemeinsames Ablegen der Stapelfasern mit den Meltblown-Fasern hergestellt ist
(b) Verpacken des Gegenstands im Verbundmaterial und
(c) gegebenenfalls Sterilisieren des verpackten Gegenstands.

15. Verfahren nach Anspruch 14, **dadurch gekennzeichnet, dass** die Meltblown-Fasern, die Stapelfasern und die Fasern des Spinnvlieses mindestens ein Polymer, ausgewählt aus Polyestern aufweisen.

## Claims

1. Use of a composite material comprising
a) a barrier ply,
b) a support ply which comprises a spunbonded web and which is arranged on at least one side of the barrier ply and bonded to the barrier ply by heat and pressure,
the barrier ply comprising a nonwoven web which contains 1% to 70% by weight of meltblown fibres and 30% to 99% by weight of staple fibres, based in each case on the total weight of the nonwoven web, as packaging material, in particular for sterile packaging applications, **characterized in that** the barrier ply is produced by jointly laying down the staple fibres with the meltblown fibres.

2. Use according to Claim 1, **characterized in that** the meltblown fibres, the staple fibres and/or the fibres of the spunbonded web comprise at least one polymer selected from polyesters and/or polyolefins.

3. Use according to Claim 1 or 2, **characterized in that** at least a proportion of the staple fibres are staple binding fibres and/or at least a proportion of the fibres of the spunbonded web are spunbonded binding fibres, the composite material preferably comprising both spunbonded binding fibres and staple binding fibres.

4. Use according to Claim 3, **characterized in that** the staple binding fibres and/or the spunbonded binding fibres are each independently bicomponent fibres, in particular core/sheath fibres.

5. Use according to one or more of the preceding claims, **characterized in that** the barrier ply is produced by blowing the staple fibres into a meltblown stream which is laid down on the support ply.

6. Use according to one or more of the preceding claims, **characterized in that** the basis weight of the composite material is between 10 g/m² and 200 g/m².

7. Use according to one or more of the preceding claims, **characterized in that** the thickness of the composite material in the machine direction and transverse direction is at least 50 µm.

8. Use according to one or more of the preceding claims, **characterized in that** the average pore size of the composite material measured in accordance with DIN ASTM E1294 (1999) is in the range from 1 µm to 15 µm.

9. Use according to one or more of the preceding claims, **characterized in that** the air permeability of the composite material is at least 200 mL/min.

10. Use according to one or more of the preceding claims, **characterized in that** the barrier ply and the support ply are bonded to each other by heat and pressure.

11. Use according to one or more of the preceding claims, **characterized in that** the composite material is designed as medical packaging and the composite material is used for packaging a medical article.

12. Packaging, in particular sterile packaging, comprising a composite material comprising
a) a barrier ply and
b) a support ply which comprises a spunbonded web and which is arranged on at least one side of the barrier ply and bonded to the barrier ply by heat and pressure,
the barrier ply comprising a nonwoven web which contains 1% to 70% by weight of meltblown fibres and 30% to 99% by weight of staple fibres, based in each case on the total weight of the nonwoven web, **characterized in that** the barrier ply is produced by jointly laying down the staple fibres with the meltblown fibres.

13. Packaging according to Claim 12, **characterized in that** the meltblown fibres, the staple fibres and the fibres of the spunbonded web comprise at least one polymer selected from polyesters.

14. Process for providing a packaged article, comprising
(a) providing the article and a composite material comprising
- a barrier ply,
- a support ply which comprises a spunbonded web and which is arranged on at least one side of the barrier ply and bonded to the barrier ply by heat and pressure, the barrier ply comprising a nonwoven web which contains 1% to 70% by weight of meltblown fibres and 30% to 99% by weight of staple fibres, based in each case on the total weight of the nonwoven web, the barrier ply having been produced by jointly laying down the staple fibres with the meltblown fibres,
(b) packaging the article in the composite material and
(c) optionally sterilizing the packaged article.

15. Process according to Claim 14, **characterized in that** the meltblown fibres, the staple fibres and the fibres of the spunbonded web comprise at least one polymer selected from polyesters.

## Revendications

1. Utilisation d'un matériau composite comprenant
a) une couche formant barrière,
b) une couche support comprenant un filé-lié, qui est agencée sur au moins une face de la couche formant barrière et reliée par la chaleur et la pression à la couche formant barrière,
la couche formant barrière comprenant un non-tissé qui contient 1 à 70 % en poids de fibres obtenues par fusion-soufflage ainsi que 30 à 99 % en poids de fibres discontinues, à chaque fois par rapport au poids total du non-tissé, comme matériau d'emballage, en particulier pour des applications d'emballage stérile, **caractérisée en ce que** la couche formant barrière est fabriquée par dépôt commun des fibres discontinues avec les fibres obtenues par fusion-soufflage.

2. Utilisation selon la revendication 1, **caractérisée en ce que** les fibres obtenues par fusion-soufflage, les fibres discontinues et/ou les fibres du filé-lié présentent au moins un polymère, choisi parmi les polyesters et/ou les polyoléfines.

3. Utilisation selon la revendication 1 ou 2, **caractérisée en ce que** les fibres discontinues sont au moins en partie des fibres lieuses discontinues et/ou les fibres du filé-lié sont au moins en partie des fibres lieuses de filé-lié, le matériau composite présentant de préférence à la fois des fibres lieuses de filé-lié et des fibres lieuses discontinues.

4. Utilisation selon la revendication 3, **caractérisée en ce que** les fibres lieuses discontinues et/ou les fibres lieuses de filé-lié sont, indépendamment les unes des autres, des fibres à deux composants, en particulier des fibres à âme/enveloppe.

5. Utilisation selon l'une ou plusieurs des revendications précédentes, **caractérisée en ce que** la couche formant barrière est fabriquée par soufflage des fibres discontinues dans un flux obtenu par fusion-soufflage qui est déposé sur la couche support.

6. Utilisation selon l'une ou plusieurs des revendications précédentes, **caractérisée en ce que** le poids surfacique du matériau composite est situé entre 10 g/m² et 200 g/m².

7. Utilisation selon l'une ou plusieurs des revendications précédentes, **caractérisée en ce que** l'épaisseur du matériau composite dans le sens machine et dans le sens transversal représente au moins 50 µm.

8. Utilisation selon l'une ou plusieurs des revendications précédentes, **caractérisée en ce que** la dimension moyenne des pores du matériau composite, mesurée selon la norme DIN ASTM E1294 (1999), se situe dans la plage de 1 µm à 15 µm.

9. Utilisation selon l'une ou plusieurs des revendications précédentes, **caractérisée en ce que** la perméabilité à l'air du matériau composite représente au moins 200 ml/min.

10. Utilisation selon l'une ou plusieurs des revendications précédentes, **caractérisée en ce que** la couche formant barrière et la couche support sont reliées l'une à l'autre par la chaleur et la pression.

11. Utilisation selon l'une ou plusieurs des revendications précédentes, **caractérisée en ce que** le matériau composite est réalisé sous forme d'emballage médical et le matériau composite est utilisé pour l'emballage d'un objet médical.

12. Emballage, en particulier emballage stérile, comprenant un matériau composite qui comprend
a) une couche formant barrière, ainsi que
b) une couche support comprenant un filé-lié, qui est agencée sur au moins une face de la couche formant barrière et reliée par la chaleur et la pression à la couche formant barrière,
la couche formant barrière comprenant un non-tissé qui contient 1 à 70 % en poids de fibres obtenues par fusion-soufflage ainsi que 30 à 99 % en poids de fibres discontinues, à chaque fois par rapport au poids total du non-tissé, **caractérisée en ce que** la couche formant barrière est fabriquée par dépôt commun des fibres discontinues avec les fibres obtenues par fusion-soufflage.

13. Emballage selon la revendication 12, **caractérisé en ce que** les fibres obtenues par fusion-soufflage, les fibres discontinues et les fibres du filé-lié présentent au moins un polymère, choisi parmi les polyesters.

14. Procédé pour la mise à disposition d'un objet emballé, comprenant
(a) la mise à disposition de l'objet et d'un matériau composite, comprenant
- une couche formant barrière,
- une couche support comprenant un filé-lié, qui est agencée sur au moins une face de la couche formant barrière et reliée par la chaleur et la pression à la couche formant barrière, la couche formant barrière comprenant un non-tissé qui contient 1 à 70 % en poids de fibres obtenues par fusion-soufflage ainsi que 30 à 99 % en poids de fibres discontinues, à chaque fois par rapport au poids total du non-tissé, la couche formant barrière étant fabriquée par dépôt commun des fibres discontinues avec les fibres obtenues par fusion-soufflage,
(b) emballage de l'objet dans le matériau composite et
(c) le cas échéant stérilisation de l'objet emballé.

15. Procédé selon la revendication 14, **caractérisé en ce que** les fibres obtenues par fusion-soufflage, les fibres discontinues et les fibres du filé-lié présentent au moins un polymère, choisi parmi les polyesters.
